# EUROPEAN PATENT APPLICATION

(11) **EP 4 564 741 A1**
(43) Date of publication of application: **04.06.2025**
(21) Application number: 23213362.9
(22) Date of filing: 30.11.2023
(51) Int. Cl.: H04L 9/40, H04W 12/0431, H04W 12/06

(54) **SECURE ELEMENT FOR EFFICIENT AUTHENTICATION IN GENERIC BOOTSTRAPPING ARCHITECTURE**

(71) Applicant: Giesecke+Devrient Mobile Security Germany GmbH, 81677 München (DE)
(72) Inventor: PATEL, Praveen, 412101 Pune (IN)
(74) Representative: Ter Meer Steinmeister & Partner

(57) **Abstract**

Provided is a secure element to securely communicate over a mobile communication network, the secure element comprising a secure control unit which is configured to determine, directly after a session with a mobile network entity via a mobile core network being initialized, whether a fresh bootstrapping operation is required, wherein the bootstrapping operation is configured to generate a shared key for establishing a secure communication channel to the mobile network entity, and subsequently establish the secure communication channel to the mobile network entity.

## Description

The present invention relates to a secure element, a terminal device comprising the secure element, a system comprising the terminal device and a mobile network entity to securely communicate over a mobile communications network. The invention further relates to corresponding methods of the secure element, the terminal device and the system.

Massive amounts of devices connect daily to existing mobile communication networks. The number of devices, in particular terminal devices or end (user) devices, is increasing at an accelerating pace due to the fourth industrial revolution which is driven by the Internet of Things, IoT.

For a secured communication over the mobile communication network, a mobile communication is required to include a secure element, in particular a subscriber identity module, SIM, including at least one subscription profile. The subscription profile is a set of subscription data, including at least the International Mobile Subscriber Identity, IMSI, and the subscriber authentication key K. The profile enables the terminal device to authenticate the terminal device to the mobile communication network and vice versa.

The communication between the terminal device and an application server over the mobile communication network may be secured in practice by a shared key-based mutual authentication, e.g., using transport layer security (TLS) which is achieved by a TLS handshake. The TLS handshake enables the TLS client and the TLS server to create the secret keys based on which they will communicate, i.e., by which they mutually encrypt/decrypt the communicated data packages.

The most recent version of TLS is TLS 1.3, which may be used according to the norm ETSI TS 133 122 V 17.2.0 by a terminal device or its secure element when contacting a network application function (NAF) of the mobile communication network.

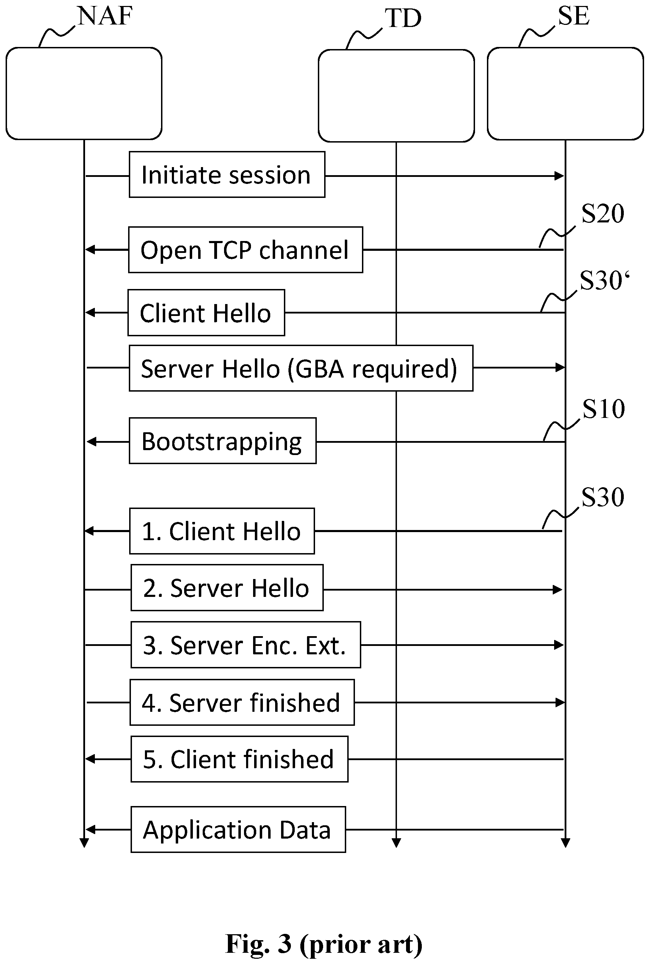

As illustrated in Fig. 3, a communication channel based on the transport channel protocol (TCP) is established, essentially by a three-way- or TCP-handshake. Accordingly, the terminal device may first send a connection request to the NAF. The NAF confirms receipt of the message and also expresses its connection request, thereby initializing the session. The terminal device or secure element confirms receipt of the message in step S20. Subsequently, data may be exchanged between the secure element and the NAF.

During this data exchange, when the terminal device contacts the NAF using a client-hello message (S30'), it may indicate to the NAF that it supports TLS with a shared key (PSK) authentication. The terminal device (or its secure element) shall send the hostname of the NAF using the server_name extension to the client-hello message according to TLS extensions. The terminal device shall further indicate support of authentication methods other than PSK in the client-hello message. The NAF may either establish a TLS tunnel using PSK authentication in response to the client-hello of the terminal device or request a new PSK based on GBA.

Fig. 3 depicts a typical sequence diagram for the communication between the NAF and the secure element according to TLS 1.3 when the NAF request a new PSK based on GBA. The new PSK may be generated during a fresh bootstrapping using a bootstrapping method as indicated by the NAF in its server-hello message. In this case, the terminal device shall treat the server-hello message as a hello-retry request and shall perform a fresh bootstrapping run (S 10) for the indicated bootstrapping method. Once the bootstrapping is completed, the terminal device or its secure element shall send a new client-hello in step S30 including only the PSK-identity name space of the chosen bootstrapping method and a new bootstrapping transaction identifier (B-TID).

In other words, after the bootstrapping run, the terminal device fully restarts contacting the NAF by sending a new client-hello message. This restart is inefficient, in particular since the NAF usually decides independent of the terminal device or its initial client-hello S30' whether a new PSK based on GBA shall be used.

Hence, there is a need to provide a secure element which is adapted to establish a TLS connection involving a bootstrapping run more efficiently.

There may be a further need to reducing the time for securing a mobile communication involving a bootstrapping run.

This objective is solved with the features of the independent claims. Further advantageous embodiments are described in the dependent patent claims.

In an aspect of the present invention there is provided a secure element being adapted to securely communicate over a mobile communication network.

The secure element comprises a secure control unit which is configured to determine, directly after a session with a mobile network entity via a mobile core network being initialized, whether a fresh bootstrapping operation is required, wherein the bootstrapping operation is configured to generate a shared key for establishing a secure communication channel to the mobile network entity, and subsequently establish the secure communication channel to the mobile network entity.

Initializing a session with the mobile network entity may be controlled by the mobile network entity, in particular the NAF. The mobile network entity may initialize the session upon sending a push request to the secure element. Moreover, the secure element may initialize the session upon sending a pull request to the mobile network entity.

The secure control unit of the secure element may be configured to host a Hypertext Transfer Protocol Secure (HTTPS) capable client, i.e., both a Hypertext Transfer Protocol (HTTP) client and a TLS client. In this case, a first shared key, Ks_int_NAF, shall be used between the secure element and the mobile network entity.

In contrast to TLS 1.3, the secure element does not initiate the usual TLS handshake before having determined whether a fresh bootstrapping operation is required. In other words, the secure element first determines whether a fresh bootstrapping operation is required, and executes the fresh bootstrapping operation, if required, before opening the communication channel to the mobile network entity. The first client-hello message according to TLS extensions of the secure element therefore always comprises the expected identity of shared key, by design, such that no hello-retry request message of the mobile network entity and no second client-hello message of the secure element are needed. Thus, the number of messages to establish a secure communication connection, in particular based on TLS, between the secure element and the mobile network entity, is reduced in case of a required fresh bootstrapping operation. Thus, a TLS handshake involving a fresh bootstrapping operation according to the invention is more efficient and faster than TLS 1.3 and/or previous versions of TLS.

The bootstrapping operation, also referred to as GBA bootstrapping procedure or simply GBA, may be executed in a terminal device comprising the secure element. Preferably, the GBA is executed in the secure element. For instance, the GBA may be a service that is available in the secure element, i.e., its secure control unit, in particular service n°68 according to ETSI TS 131102 V17.10.0.

The communication channel between the secure element and the mobile network entity may be a communication channel according to a network protocol, in particular the transmission control protocol (TCP). Hence, the communication channel may be also referred to as TCP connection or simply connection, which is usually established upon a handshake between the secure element and the mobile network entity. This handshake may be triggered by the secure element using a pull request or by the mobile network entity using a push request. Preferably, the mobile network entity initiates the communication channel independent of which side initially triggered.

Multiple transactions between the secure element and the mobile network entity, completed over the same established TCP connection are considered a session. A session may also comprise of multiple TCP connections between the same secure element and the mobile network entity to improve performance.

The communication channel or connection may be secured by mutual authentication between the secure element and the mobile network entity, e.g., using the TLS handshake. The goal of the TLS handshake is to establish cryptographic key pairs for each session, by which data packages which are transmitted over the secured session or TLS session are transport-encrypted.

In a preferred embodiment, the secure control unit is further configured to determine autonomously, whether the fresh bootstrapping operation is required.

In this embodiment, a toolkit-initiated bootstrapping run or GBA is supported by the secure element, which may be indicated in the terminal profile. The secure element may autonomously determine whether a fresh bootstrapping run is required by proactively issuing a refresh command implying a file change notification on the GBA bootstrapping parameters to initiate the GBA bootstrapping procedure according to TS 31.102 or TS 31.103.

In a preferred embodiment, the secure element further comprises a secure storage unit, in which a first session bootstrap parameter is stored. The first session bootstrap parameter may be stored initially during production of the secure element and/or the secure control unit of the secure element may be configured to directly store, read, write, change and/or delete the first session bootstrap parameter in the secure storage unit. Moreover, the shared key and/or the cryptographic session keys may be stored in the secure storage unit.

The secure control unit is configured to determine, based on the value of the first session bootstrap parameter, whether the fresh bootstrapping operation is required, wherein the value of the first bootstrap parameter represents one of "bootstrapping required" or "not required".

In this embodiment, the secure element may determine whether a fresh bootstrap operation is required by assessing or reading the value of the first session bootstrap parameter of the secure storage unit. If the value indicates "bootstrapping required", the secure element preferably initiates the GBA bootstrapping procedure. Upon generation of a new shared key, the secure element transmits a client-hello message according to TLS extensions based on the new shared key. In case the value indicates "not required", the secure element transmits a client-hello message according to TLS extensions to establish the secure communication channel based on the existing shared key, in particular the existing PSK.

The first session bootstrap parameter may be a parameter of the "Security Domain Administration Session Parameters" as specified by the norm Global Platform Remote Application Management over HTTP v1.2 under clause 3.8. The administration session parameters of a security domain (SD) may be set using tag '85' or 'A5' during installation of an application in the secure control unit or during personalization, i.e., within a store data command in type-length-value (TLV) mode. The store data command with tag '85' may be used to create or update the complete set of SD Administration Session Parameters. The store data command with tag 'A5' may be used to create, update, or remove sub-TLVs, including HTTP POST parameters which may be set using tag '89'. The first session bootstrap parameter may be a HTTP POST parameter to be set using tag '8D'. Preferably, the default value of the first session bootstrap parameter is "not required".

In a preferred embodiment, the secure control unit is configured to receive an indication comprising a second session bootstrap parameter of the mobile network entity during initialization of the session and to determine, based on the second bootstrap parameter, whether the fresh bootstrapping operation is required, wherein the value of the second bootstrap parameter represents one of "bootstrapping required" or "not required".

Preferably, the function and TLV structure of the second session bootstrap parameter is identical to the function and TLV structure of the first session bootstrap parameter, i.e., it is also a parameter that may be set using tag '8D' and whose value determines whether a fresh bootstrap operation is required.

Preferably, when the first session bootstrap parameter is set to "not required", a value of the second session bootstrap parameter indicating "bootstrapping required" overrules the first session bootstrap parameter. In this case, the mobile network entity requests a fresh bootstrapping operation already during initializing the TCP connection, i.e., before it has received a client-hello from the secure element. In this embodiment, the mobile network entity preferably initiates the bootstrapping operation, if required.

When the value of the first session bootstrap parameter is set to "bootstrapping required", the bootstrapping operation may be initiated by the secure element independently of the value of the second session bootstrap parameter which the secure element may receive during initialization of the TCP connection. In other words, preferably the side which demands a new shared key also initiates the bootstrapping operation.

In practice, there are two modes of the bootstrapping operation, as defined in ETSI TS 131 102 V17.10.0. The bootstrapping operation may be carried out in a GBA security context which involves executing the AUTHENTICATE function. This function is used in GBA security context in two different modes:
In a first mode, also referred to as Bootstrapping Mode, the AUTHENTICATE function is used during the procedure for mutual authenticating of the secure element and a core network entity providing the bootstrapping server function (BSF) and for deriving bootstrapped key material from the Authentication and Key Agreement (AKA) run. The BSF may be determined and/or provided by the mobile network entity.
In a second mode, also referred to as NAF Derivation Mode, the AUTHETICATE function is used during the procedure for deriving Network Application Function (NAF) specific keys from previous bootstrapped key material.

The AUTHENTICATE function is related to a particular secure element and shall not be executed unless at least an application of the secure element has been selected and activated and a successful PIN verification procedure has been performed.

During AUTHENTICATE function, the secure control unit of the secure element may first compute an anonymity key AK based on an authentication vector (AV) received from the BSF. Based on the AK, the secure control unit may determine a sequence number SQN. The secure control unit may further compute an expected MAC value and compare the computed value to the MAC which is included in the AV. If the secure control unit determines a difference between the expected MAC value and the received MAX value, it may abandon the function. Moreover, the secure control unit may verify that the received SQN is previously unused. If the secure control unit detects the SQN to be invalid, this is considered a synchronization failure, and the secure control unit may abandon the function. However, the SQN is verified to be correct and/or the expected MAC value matches the received MAC value, the secure control unit may continue to compute at least a result (RES), cipher key (CK) and integrity key (IK).

In another embodiment, when the indication comprises the second session bootstrap parameter, the secure control unit may be configured to determine whether the fresh bootstrapping operation is required based on prioritizing the second session bootstrap parameter transmitted within the indication over the first session bootstrap parameter stored in the secure storage module.

In another embodiment, the secure control module may be adapted to determine whether the fresh bootstrapping operation (GBA) is required based on the second bootstrap parameter first, and, if the indication is not provided by the mobile network entity, to read out the value of the first bootstrap parameter. In one embodiment, each of the first and second session bootstrap parameters may comprise a binary value..

In another embodiment, the secure control unit may be further adapted to set the value of the first session bootstrap parameter to "not required" after completion of the fresh bootstrap operation. This feature has the advantage that subsequent connections between the secure element and the mobile network entity may be established using the same new shared key as long as the secure element and/or the mobile network entity decide to request a further new shared key.

In a preferred embodiment, the secure control unit may be configured to open the secure communication channel by sending a client-hello message, wherein the client-hello message may comprise a prefix indicating a namespace of the chosen bootstrapping method and a bootstrapping transaction identifier (B-TID).

The term "secure element" is synonymous with the term "UICC", "eUICC", "iUICC", "Subscriber Identity Module", "Smart Card", "iUICC", "Integrated eUICC", "Integrated Secure Element", "embedded Secure Element", "Secure Element", "SIM", "eSIM" or "iSIM". Secure element also includes USIM, TSIM, ISIM, CSIM or R-UIM.

A secure element, abbreviated SE, in the sense of the invention is an electronic module reduced in size and resource scope, which may have a control unit (microcontroller) and at least one interface (data interface) for communication with instances located outside the secure element, such as terminal devices, servers, etc. This communication preferably takes place via a connection protocol, in the case of a secure element, in particular a protocol in accordance with the ETSI TS 102 221 or ISO-7816 standard.

The secure element can also be a software component in a trusted part of an operating system, a so-called Trusted Execution Environment, or TEE, of the device. For example, the secure element is formed within a secure runtime environment in the form of programs running therein, so-called "trustlets".

The secure element can also be an integral part of a larger integrated circuit, such as a modem or application processor. Such SEs are referred to as "integrated UICC," "integrated TRE," "integrated eUICC," or "integrated SE." Such SEs are permanently integrated into an SoC as an integrated processor block and can be connected via an in-chip bus. The SE has, for example, an internal or external secure non-volatile memory area in which the identity data is securely placed to prevent tampering and/or misuse attempts during identification and/or authentication to the network.

In one embodiment, the secure element can be operable by means of a terminal device, whereby the SE in this embodiment is self-sufficient except for supply signals such as supply voltage, clock, reset, etc. Then the secure element may have an interface (data interface, communication interface) for communication with the terminal device, into which the secure element may be inserted ready for operation. This communication preferably takes place via a connection protocol, in particular a protocol in accordance with the ETSI TS 102 221 or ISO-7816 standard.

Provided is further a terminal device that is adapted to communicate securely over a mobile communication network. The terminal device comprises a secure element as described above, and a communication interface which is adapted to communicate via the mobile communication network.

The terminal device may be adapted to forward data packages between the secure element and the mobile network entity.

In one embodiment, the HTTPS client, i.e., the HTTP client and the TLS client, may be in the terminal device, hosted by a control unit of the terminal device. In this case, a second shared key, Ks_(ext)_NAF, is to be used for establishing the secure channel.

Provided is moreover a system for securely communicating over a mobile communication network. The system comprises a terminal device and a mobile network entity.

The terminal device comprises a secure element as described above and a communication interface which is adapted to communicate via the mobile communication network. The terminal device is configured to receive a push request from a mobile network entity or transmit a pull request to the mobile network entity to initiate a session with the mobile network entity, forward the push request to or the pull request from the secure element. Moreover, the terminal device may be configured to execute a bootstrapping operation, if determined to be required, and open the secure communication channel to the mobile network entity.

The mobile network entity is configured to transmit a push request to the terminal device or receive a pull request from the terminal device, participate in executing the bootstrapping operation, if determined to be required, and establish the secure communication channel to the communication interface of the terminal device.

In a preferred embodiment, the mobile network entity may be a network application function (NAF), i.e., an application server which is accessible by the secure element SE or its terminal device via the mobile communication network.

In one embodiment, the terminal device is further adapted to send a client-hello based on the shared key, and wherein the mobile network entity is adapted to respond to the client hello using a server-hello based on the shared key.

Provided is further a method for securing a communication channel over a mobile communication network, the method to be executed by a secure element as described above. The method comprises the following steps to be executed in the following order:
- determining, directly after the session being initialized, whether a fresh bootstrapping operation is required, wherein the bootstrapping operation is configured to generate a shared key for establishing the secure communication channel to the mobile network entity, and
- opening the secure communication channel to the mobile network entity.

By determining whether the bootstrapping operation is required, executing the bootstrapping operation if required, the number of messages during a TLS handshake within the GBA may be effectively reduced. Due to this order of execution, it is not required that the secure element receives a server-hello message from the mobile network entity which shall be treated as hello-retry request and repeatedly transmits a client-hello message based on the new shared key after having performed the bootstrapping operation.

In one embodiment, the determining, whether the fresh bootstrapping operation is required, involves autonomously determining, preferably based on the first session bootstrap parameter stored in the secure storage unit of the secure element, whether the fresh bootstrapping operation is required. Alternatively, or additionally, the determining involves receiving the indication comprising the second session bootstrap parameter from the mobile network entity during initialization of the session, and determining based on the second session bootstrap parameter, whether the fresh bootstrapping operation is required.

The first session bootstrap parameter and/or the second session bootstrap parameter may be a parameter of the SD administration session parameters as elaborated above.

In one embodiment, the method further comprises setting the value of the first session bootstrap parameter to "not required" after completion of the fresh bootstrap operation.

In one embodiment, the method further comprises sending a client-hello message, wherein the client-hello message comprises a prefix indicating a name space of the chosen bootstrapping method and a bootstrapping transaction identifier (B-TID).

Provided is a method to be executed in above specified system, the method comprising the steps in the following order:
- initializing, by the mobile network entity, a session to the secure element SE via a push request or a pull request,
- determining, by the secure element, directly after the session being initialized, whether a fresh bootstrap operation is required, and if so, executing the fresh bootstrap operation to obtain a valid GBA-based shared secret for establishing a secure communication channel,
- subsequently establishing, jointly by the secure element and the mobile network entity, the secure communication channel based on a mutual authentication using the GBA-based shared secret.

The secure element may start establishing the secure communication channel by sending a client-hello message. According to the invention, the client-hello message of the secure element SE always comprises an identity of the valid shared key. Hence, the mobile network entity does not need to send a repellent server-hello message to the secure element SE, which the secure element SE shall treat as hello-retry request. Thus, the method according to the invention saves a pair of client-hello and server-hello messages along with related operations executed in the secure element SE and the mobile network entity NAF during establishing a secure communication channel involving a bootstrapping operation with respect to prior art. As a result, a secure TCP connection involving GBA may be established more efficiently and faster.

Provided is furthermore a computer-readable medium comprising instructions, which, when executed in a secure element as described above, cause the secure control unit to carry out the method steps as described above.

In the following, the invention or further embodiments and advantages of the invention are explained in more detail based on drawings, wherein the drawings describe only embodiments of the invention. Identical components in the drawings are given the same reference signs. Elements drawn with dashed lines are considered as optional elements.

The drawings are not to be regarded as true to scale, and individual elements of the drawings may be shown in exaggeratedly large or exaggeratedly simplified form.
Fig. 1 shows an exemplary embodiment of a secure element according to an aspect of the invention.
Fig. 2 shows an exemplary embodiment of a system according to an aspect of the invention.
Fig. 3 shows a sequence diagram of the handshake based on TLS 1.3 involving a bootstrapping operation according to prior art.
Fig. 4 shows an exemplary sequence diagram of a method according to the invention.

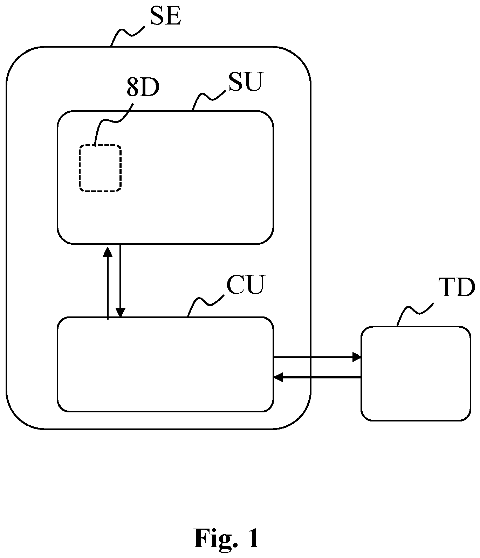

Fig. 1 shows an exemplary embodiment of a secure element according to an aspect of the invention.

The secure element SE of the embodiment of Fig. 1 may comprise a secure control unit CU and a secure storage unit SU, wherein the secure control unit CU is configured to operate on the secure storage unit SU as indicated by the two opposing arrows. In particular, the secure control unit CU is configured to run a store data command in type-length-value (TLV) mode for updating the Security Domain Administration Session Parameters at least partially.

The Security Domain Administration Session Parameters may comprise a first session bootstrap parameter 8D. This parameter may be stored in a data structure, preferably TLV structure, wherein the value represents whether a bootstrap is required when establishing the next secure communication channel with a mobile network entity. The first session bootstrap parameter 8D may preferably store the values "bootstrap required" and "not required" or a binary value, wherein 0 representing "not required" and 1 representing "bootstrap required", or vice versa.

The secure control unit CU of the secure element SE of Fig. 1 may be configured to determine, directly after a session with a mobile network entity NAF via a mobile core network being initialized, whether a fresh bootstrapping operation GBA is required. The bootstrapping operation GBA is configured to generate a shared key PSK (based on GBA) for establishing a secure communication channel to the mobile network entity NAF. "Directly" means that this step is the first step that is executed by the secure control unit CU after a session being initialized. Usually, the session is initialized by the mobile network entity NAF via a push request or via a pull request received from the secure element SE. In other words, the secure control unit CU is adapted to determine whether a bootstrapping operation GBA is required before opening a TCP channel to the mobile network entity and sending a client-hello message.

Determining whether a fresh bootstrapping operation GBA is required may also involve, if required, to execute the fresh bootstrapping operation GBA to generate a fresh shared key PSK for mutual authentication with the mobile network entity NAF.

The secure control unit CU is further configured to subsequently establish the secure communication channel to the mobile network entity NAF. "Subsequently" means to perform this step directly after determining whether a fresh bootstrapping operation GBA is required, i.e., after the required shared key PSK is generated. The shared key PSK (not shown) may be stored in the secure storage unit SU of the secure element SE.

The secure control unit CU may be communicatively coupled to the terminal device TD for communicating with the mobile network entity NAF, in particular using the communication interface CI of the terminal device TD.

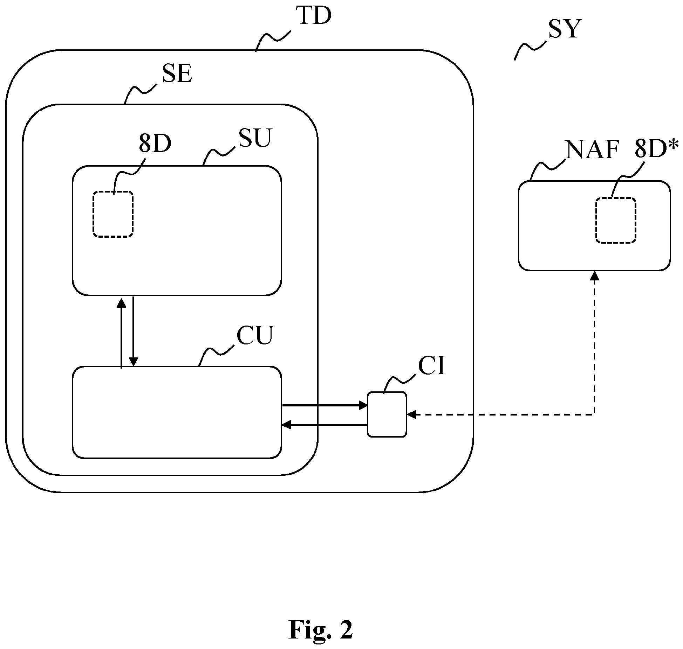

Fig. 2 shows an exemplary embodiment of a system according to an aspect of the invention.

The system SY of Fig. 2 comprises a terminal device TD and a mobile network entity NAF.

The terminal device TD further comprises a secure element SE which may be configured as described above, in particular with respect to Fig. 1. The terminal device TD further includes a communication interface CI, e.g., a modem, via which the secure control unit CU of the secure element may communicate (transmit and receive data packages) with the mobile network entity NAF. The communication channel or TCP connection between the communication interface CI and the mobile network entity NAF is depicted as dashed-lined double arrow in Fig. 2. The terminal device TD may further comprise its own control unit (not shown). However, the control unit of the terminal device TD has no access to the secure storage unit (SU) of the secure element.

The mobile network entity NAF may be configured to initiate a session with the terminal device RD (or its secure element SE), wherein initiating the session comprises provide an indication to the terminal device TD of whether a fresh bootstrapping operation GBA is required to secure the session, i.e., to establish a TLS connection. This indication may be a second session bootstrap parameter 8D* which preferably has the same function and TLV structure as the first session bootstrap parameter 8D. The only difference between the two session bootstrap parameters 8D, 8D* may be that the first session bootstrap parameter 8D is only stored in the secure storage unit SU, wherein the second session bootstrap parameter 8D* is provided by the mobile connection entity NAF. Hence, only the secure element SE can access the value of the first session bootstrap parameter 8D, whereas both the mobile network entity NAF and the terminal device may have knowledge of the second session bootstrap parameter 8D*.

In case the mobile network entity NAF provides this indication while initializing the session, the second session bootstrap parameter 8D* may be prioritized over the first session bootstrap parameter 8D. In other words, the second session bootstrap parameter 8D* may overrule the first session bootstrap parameter 8D. In another case, the value "bootstrap required" of any of the session bootstrap parameters 8D, 8D* is prioritized, such that independent of which side requests, a bootstrap operation GBA is to be executed before establishing the secure TCP connection.

"Prioritizing" means that if the second session bootstrap parameter 8D* is provided within the push request of the mobile network entity NAF, its value will be used by the secure control unit CU to determine whether the fresh bootstrapping operation GBA is required. The value of the first session bootstrap parameter 8D is ignored by the secure control unit CU in this case. If, however, there is no second session bootstrap parameter 8D* provided within the push request of the mobile network entity NAF, the secure control unit CU is adapted to read the value of the first session bootstrap parameter 8D and determine whether the fresh bootstrapping operation GBA is required based on the first session bootstrap parameter 8D.

Fig. 3 shows a sequence diagram of the handshake based on TLS 1.3 involving a bootstrapping operation according to prior art.

The method, further also referred to as handshake, may be executed by a system comprising a terminal device TD and a mobile network server NAF.

The method starts by the mobile network entity NAF initiating a session with the secure element SE via its terminal device TD (communication interface CI). The session may be initiated based on a push request of the mobile network entity NAF or a pull request of the secure element SE.

According to prior art, the method continues by the secure element SE opening a TCP connection in step S20. Opening the TCP connection involves a connection request of the secure element SE which is confirmed by the mobile network entity NAF and finally confirmed by the secure element SE. As a result, a TCP connection is established between the secure element SE and the mobile network entity NAF.

Next, the method continues with the TLS handshake based on TLS 1.3 for establishing a TLS tunnel based on mutual authentication using a shared key PSK. Accordingly, the secure element SE transmits a client-hello message in step S30' to the mobile network entity NAF. The secure element SE may indicate to the NAF that it supports TLS with PSK authentication in the client hello message. The secure element SE shall indicate support of authentication methods other than PSK in the client-hello message. The secure element SE shall send the hostname of the NAF using the server_name extension to the client-hello message according to TLS extensions.

Next, the method continues by the mobile network entity NAF transmitting a server-hello message to the secure element SE. If the mobile network entity NAF wants the secure element SE to perform a new bootstrapping for a particular method, the mobile network entity NAF shall indicate the index of the bootstrapping required of the selected PSK identity in the server-hello message. The secure element SE shall treat this server-hello message as a hello-retry request and shall perform a new bootstrapping run GBA in step S10 for the indicated bootstrapping method.

Once the bootstrapping operation GBA is completed, the method continues by the secure element SE sending a new client-hello message in step S30 including only the PSK-identity name space of the chosen bootstrapping method and the new BTID.

The TLS handshake continues by the mobile network entity NAF sending a server hello message in reply to the client-hello message. The server-hello message may comprise a chosen cipher suite, and a "server random," which is a random string of bytes that is generated by the mobile network entity NAF. Based thereon, the mobile network entity NAF may create a master secret.

Immediately after the server-hello message, the mobile network entity NAF is configured to send an encrypted-extensions message to the secure element SE.

The mobile network entity NAF also directly sends a server-finished message to the secure element SE.

The secure element SE may further generate the master secret and send a client-finished message to the mobile network entity NAF:
As a result, a secure symmetric encryption is achieved.

Depending on the available bandwidth of the secure element or the terminal device comprising the secure element, the procedure of the TLS handshake may take several seconds and even timeout.

Hence, there is a need for improving the handshake for establishing a secured TCP connection involving a bootstrapping run more efficiently.

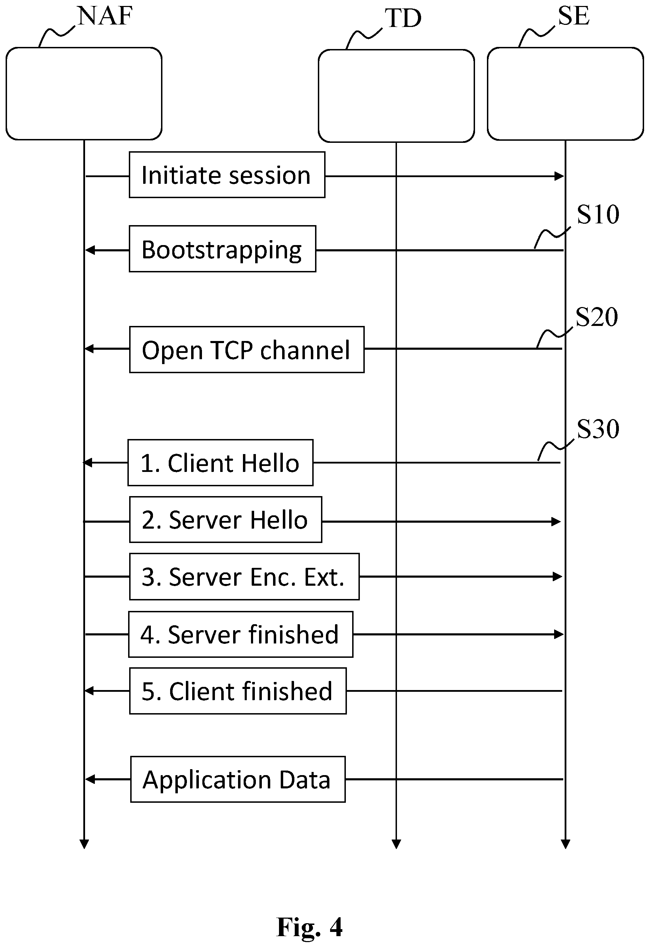

Fig. 4 shows an exemplary sequence diagram of a method according to the invention.

In contrast to the handshake of Fig. 3 (prior art), the method according to Fig. 4 is characterized in that the mobile network entity will request for HTTPs with the second session bootstrap parameter (tag 8D*) and/or the secure element SE is configured with the first session bootstrap parameter (tag 8D) in the "Security Domain Administration Session Parameters".

Thus, the secure element SE, directly after the session being initialized, determines in step S10 whether a fresh bootstrap operation GBA is required, and if so, executes the fresh bootstrap operation GBA with the bootstrap server function BSF (which may be provided by the mobile network entity NAF) to obtain a valid GBA-based shared secret for TLS with PSK authentication.

Only after the determining step S10, the secure element SE opens the TCP connection to the mobile network entity instep S20, essentially as described above.

Subsequently, the secure element SE sends the client-hello message including the PSK-identity name space of the chosen bootstrapping method and the new B-TID in step S30 to the mobile network entity NAF.

In case the mobile network entity NAF decides to use the share key (Ks_int_NF) generated by GBA than the mobile network entity NAF will select a PSK identity based on B-TID and will inform to secure element SE using the server-hello message.

Furthermore, the secure element SE and the mobile network entity NAF may use the shared key Ks_int_NAF to generate session key and authentication.

According to the invention, the secure element therefore always transmits (e.g., via the communication interface CI of the terminal device TD) a client-hello message S30 comprising the identity of shared key expected by the mobile network entity NAF. Hence, the mobile network entity does not need to send a repellent server-hello message to the secure element SE, which the secure element SE shall treat as hello-retry request. Thus, the method of Fig. 4 saves a pair of client-hello and server-hello messages along with related operations executed in the secure element SE and the mobile network entity NAF. As a result, the secure TCP connection involving GBA may be established more efficiently and faster.

The method of Fig. 4 continues by the secure element SE and the mobile network entity NAF jointly executing the TLS handshake initiated by the client-hello message S30 based on a valid PSK as described above with respect to Fig. 3.

### List of reference signs:

- SE: Secure element
- SU: Secure storage unit
- CU: Secure control unit
- 8D: first session bootstrap parameter
- 8D*: second session bootstrap parameter
- TD: Terminal device
- CI: Communication interface

- NAF: Mobile network entity
- SY: System

- S10: execute bootstrapping operation GBA
- S20: open communication channel / TCP connection
- S30: transmit client-hello message based on expected identity of shared key
- S30': transmit client-hello message

## Claims

1. A secure element (SE) to securely communicate over a mobile communication network, the secure element comprising a secure control unit (CU) which is configured to determine, directly after a session with a mobile network entity (NAF) via a mobile core network being initialized, whether a fresh bootstrapping operation (GBA) is required, wherein the bootstrapping operation (GBA) is configured to generate a shared key (PSK) for establishing a secure communication channel to the mobile network entity (NAF), and subsequently establish the secure communication channel to the mobile network entity (NAF).

2. The secure element (SE) of claim 1, wherein the secure control unit (CU) is further configured to determine autonomously, whether the fresh bootstrapping operation (GBA) is required.

3. The secure element (SE) of any of the preceding claims, further comprising a secure storage unit (SU), in which a first session bootstrap parameter is stored, wherein the secure control unit (CU) is configured to determine, based on the value of the first session bootstrap parameter, whether the fresh bootstrapping operation (GBA) is required, wherein the value of the first bootstrap parameter represents one of "bootstrapping required" or "not required".

4. The secure element (SE) of any of the preceding claims, wherein the secure control unit (CU) is configured to receive an indication comprising a second session bootstrap parameter of the mobile network entity (NAF) during initialization of the session and to determine, based on the second bootstrap parameter, whether the fresh bootstrapping operation (GBA) is required, wherein the value of the second bootstrap parameter represents one of "bootstrapping required" or "not required".

5. The secure element (SE) of claim 4, wherein, when the indication comprises the second session bootstrap parameter, the secure control unit (SE) is configured to determine whether the fresh bootstrapping operation is required based on prioritizing the second session bootstrap parameter transmitted within the indication over the first session bootstrap parameter stored in the secure storage module.

6. The secure element (SE) of claim 5, wherein the secure control module is adapted to determine whether the fresh bootstrapping operation (GBA) is required based on the second bootstrap parameter first, and, if the indication is not provided by the mobile network entity (NAF), to read out the value of the first bootstrap parameter.

7. The secure element (SE) of any of the preceding claims, wherein the secure control unit (CU) is further adapted to set the value of the first session bootstrap parameter to "not required" after completion of the fresh bootstrap operation (GBA).

8. The secure element (SE) of any of the preceding claims, wherein the secure control unit (CU) is configured to open the secure communication channel by sending a client-hello message, wherein the client-hello message comprises a prefix indicating a namespace of a chosen bootstrapping method and a bootstrapping transaction identifier (B-TID).

9. A system for securely communicating over a mobile communication network, the system comprising:
- a terminal device (TD) comprising:
- a secure element (SE) according to any of the preceding claims; and
- a communication interface (CI) which is adapted to communicate via the mobile communication network,
wherein the terminal device (TD) is configured to:
- receive a push request from a mobile network entity (NAF) or transmit a pull request to the mobile network entity (NAF) to initiate a session with the mobile network entity (NAF),
- forward the push request to or the pull request from the secure element,
- execute a bootstrapping operation (GBA), if determined to be required, and
- open the secure communication channel to the mobile network entity (CN); and
- the mobile network entity (CN) which is configured to:
- transmit a push request to the terminal device (TD) or receive a pull request from the terminal device (TD),
- participate in executing the bootstrapping operation (GBA), if determined to be required, and
- establish the secure communication channel to the communication interface of the terminal device (TD).

10. The system of claim 9, wherein the terminal device is further adapted to send a client-hello based on the shared key, and wherein the mobile network entity is adapted to respond to the client hello using a server-hello based on the shared key.

11. A method for securing a communication channel over a mobile communication network, the method to be executed by a secure element (SE) according to any of the claims 1 through 8, the method comprising the following steps to be executed in the following order:
- determining, directly after the session being initialized, whether a fresh bootstrapping operation (GBA) is required, wherein the bootstrapping operation (GBA) is configured to generate a shared key (PSK) for establishing the secure communication channel to the mobile network entity (NAF), and
- opening the secure communication channel to the mobile network entity (NAF).

12. The method of claim 11, wherein the determining, whether the fresh bootstrapping operation (GBA) is required, involves
- autonomously determining, preferably based on the first session bootstrap parameter stored in the secure storage unit (SU) of the secure element (SE), whether the fresh bootstrapping operation (GBA) is required; and/or,
- receiving the indication comprising the second session bootstrap parameter from the mobile network entity (CN) during initialization of the session, and
- determining based on the second session bootstrap parameter, whether the fresh bootstrapping operation (GBA) is required.

13. The method of any of claims 11 or 12, further comprising:
setting the value of the first session bootstrap parameter to "not required" after completion of the fresh bootstrap operation (GBA).

14. The method of any of claims 11 through 13, further comprising:
sending a client-hello message, wherein the client-hello message comprises a prefix indicating a namespace of a chosen bootstrapping method and a bootstrapping transaction identifier (B-TID).

15. A computer-readable medium comprising instructions, which, when executed in a secure element of any of claims 1 through 8, cause the secure control unit (CU) to carry out the method steps of any of claims 11 through 14.
